# EUROPEAN PATENT SPECIFICATION

(11) **EP 1 988 660 B1**
(45) Date of publication and mention of the grant of the patent: **21.03.2012**
(21) Application number: 07702085.7
(22) Date of filing: 16.01.2007
(51) Int. Cl.: H04L 12/24, H04W 72/14

(54) **A PROCESSING METHOD AND USER EQUIPMENT FOR THE SERVING-GRANT INITIAL CONFIGURATION INFORMATION**
VERARBEITUNGSVERFAHREN UND BENUTZERGERÄTE FÜR DIE GEWÄHRUNGSVERSORGUNGS-ANFANGSKONFIGURATIONSINFORMATIONEN
PROCÉDÉ DE TRAITEMENT, ET ÉQUIPEMENT UTILISATEUR POUR INFORMATIONS DE CONFIGURATION INITIALE D'OCTROI DE DESSERTE

(30) Priority: 08.02.2006 CN 200610054628
(43) Date of publication of application: 05.11.2008
(73) Proprietor: Huawei Technologies Co., Ltd., Shenzhen, Guangdong Province 518129 (CN)
(72) Inventor: CHEN, Bin, Guangdong Province 518129 (CN); ZHUANG, Hongcheng, Guangdong Province 518129 (CN)
(74) Representative: Pfenning, Meinig & Partner GbR
(86) International application number: PCT/CN2007/000153
(87) International publication number: WO 2007/090334

(56) References cited:
- WO-A-01/52448
- CN-A- 1 366 263
- CN-A- 1 567 898
- JP-A- 2002 352 145
- "3rd Generation Partnership Project;Technical Specification Group Radio Access Network;Medium Access Control (MAC) protocol specification(Release 6)" 3GPP DRAFT; 25321-660, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Cannes, France; 20051010, 9 October 2005 (2005-10-09), XP050129439
- SIEMENS: "EDCH identity priority" INTERNET CITATION, [Online] XP002367157 Retrieved from the Internet: URL:http://www.3gpp.org/ftp/tsg_ran/WG2_RL 2/TSGR2_43/Docs/> [retrieved on 2004-11-12]
- HUAWEI: "E-DCH Serving Grant Update" 3GPP DRAFT; R2-060547(PROPOSED CR TO 25.321 ON EDCH SERVING GRANT UPDATE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Denver, USA; 20060213, 8 February 2006 (2006-02-08), XP050130507

## Description

### Field of the Invention

The present invention relates to the field of Serving-Grant in a mobile communications system, and in particular, to a method and a user equipment for processing Serving-Grant initial configuration information.

### Background of the Invention

The 3rd Generation Partnership Project (3GPP), since the appearance of its version of REL6, has provided High Speed Uplink Packet Access (HSUPA) technology for enabling high speed transmission of uplink packets at air interfaces. The HSUPA technology employs Hybrid Automatic Repeat Request (HARQ) technology, base station (Node B) fast scheduling technology and uplink 2ms short frame technology, thereby greatly improving uplink user data throughput with an air interface peak rate up to 5.76Mbps, as well as significantly the uplink capacity of the system.

HSUPA is achieved through the interaction of Enhanced Dedicated Channel (E-DCH), E-DCH Dedicated Physical Control Channel (E-DPCCH), E-DCH Dedicated Physical Data Channel (E-DPDCH), E-DCH Hybrid ARQ Indicator Channel (E-HICH), E-DCH Relative Grant Channel (E-RGCH), E-DCH Absolute Grant Channel (E-AGCH). In general, these channels are pre-configured during channel setup (and may also be re-configured during calling).

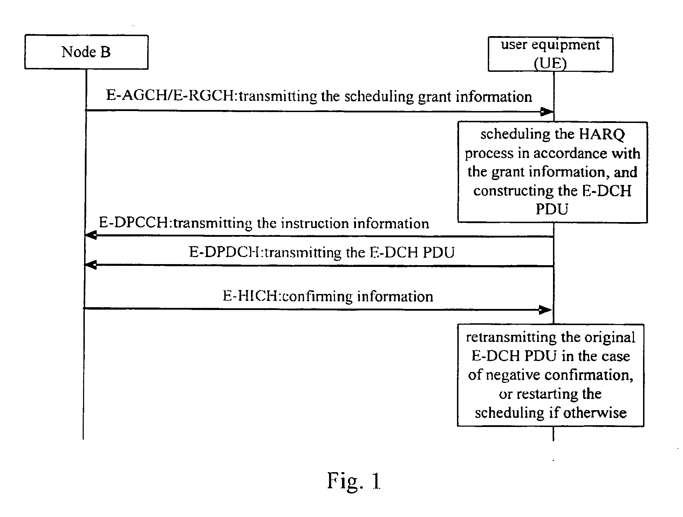

Fig. 1 is a flow chart showing data transmission during the use of HSUPA resources in the prior art. A Node B transmits, on an E-RGCH/E-AGCH, scheduling grant information to a User Equipment (UE). The UE performs Hybrid ARQ (HARQ) process scheduling based on the grant information, and transmits data on a transmission channel E-DCH, which is mapped onto a physical channel E-DPDCH to transmit the data to the Node B, with instruction information being transmitted on an E-DPCCH to the Node B. The Node B then receives the data from the E-DPDCH and the instruction information from the E-DPCCH simultaneously, and decodes the data on the E-DPDCH according to the instruction information on the E-DPCCH. The Node B then transmits, on the E-HICH, what it has received and uplink channel quality status to the UE. Finally, the UE determines what to transmit next, according to the information on the E-HICH in connection with the grant information on the E-RGCH and the E-AGCH.

The scheduling grant information transmitted from the Node B to the user via the E-AGCH/E-RGCH determines HSUPA transmission resources available to the UE. What is transmitted on the E-AGCH is absolute scheduling grant information, which may directly specify HSUPA transmission resources available to the UE. What is transmitted on the E-RGCH is relative scheduling grant information, which is received and used by the UE to increase or decrease its currently owned transmission resources according to a specified proportion.

E-DCH Radio Network Temporary Identifier (E-RNTI), which is an identification code of the UE in the HSUPA, is divided into primary E-RNTI and secondary E-RNTI and configured by a Serving Radio Network Controller (SRNC) during channel setup, and the absolute scheduling grant on the E-AGCH is in turn categorized into two types: primary grant and secondary grant. The primary grant is identified by the primary E-RNTI, whose corresponding value is directly assigned into a variable Serving-Grant of the UE. The UE further uses the value in the variable to judge HSUPA transmission resources available to the UE. The secondary grant is identified by the secondary E-RNTI, whose corresponding value, only if the primary E-RNTI is unavailable, is directly assigned into a variable Serving-Grant and; otherwise, stored into a variable Stored-secondary-grant of the UE, for subsequent assignment to the variable Serving-Grant when the primary E-RNTI is invalid.

Before the UE begins to utilize the HSUPA resources, a Serving Radio Network Controller (SRNC) initially configures the value of the variable Serving-Grant typically by configuring or reconfiguring a radio resource control (RRC) message through a radio channel.

The above RRC message configured or re-configured via the radio channel includes the Serving-Grant related initial configuration information which includes two parts: one is the Serving-Grant value; the other is the primary/secondary grant selection for indicating. In the subsequent HSUPA execution, whether the value in the variable Serving-Grant is configured by the primary grant (absolute scheduling grant information identified by the primary E-RNTI), or by the secondary grant (absolute scheduling grant information identified by the secondary E-RNTI). For example, the Serving-Grant related initial configuration information in the RRC message is shown in Table 1.

**Table 1**

| | | | | | |
|---|---|---|---|---|---|
| > Serving-Grant | optional | | | | REL-6 |
| >>Serving-Grant value | Mandatory present | | integer(0..37,38) | 0-37 correspond to the values in the Table 9.2.5.2.1.1 in the TS25.321, 38 indicates the value of zero grant. | REL-6 |
| >>primary/ secondary grant selector | Mandatory present | | enumerated: {"primary", "secondary"} | indicating whether the Serving-Grant is received with the primary E-RNTI or the secondary E-RNTI. | REL-6 |

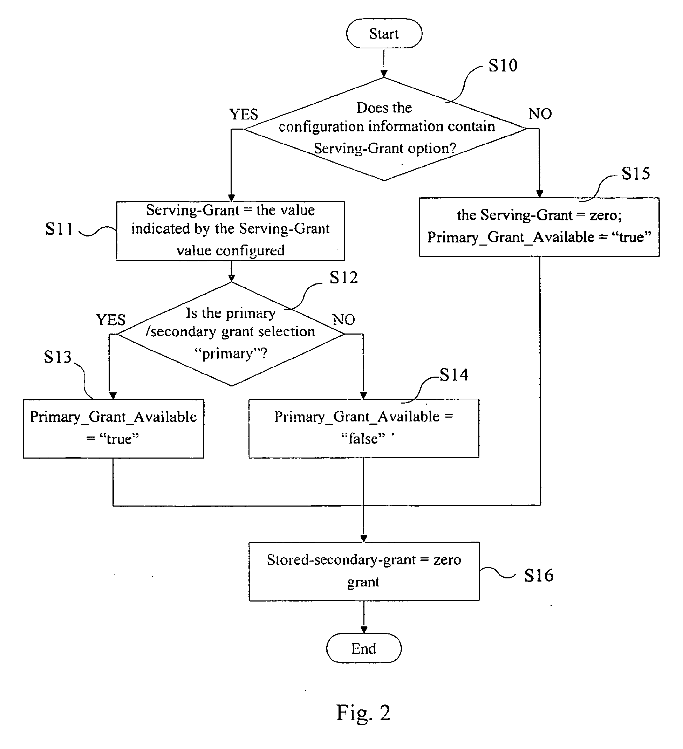

After the UE receives the initial configuration information shown in Table 1, the following processing flow is performed (illustrated in Fig. 2):

Step S10: It is determined whether the initial configuration information contains Serving-Grant option. If yes, proceeding to Step S11; if no, proceeding to Step S15.

Step S11: The value of the variable Serving-Grant is set to be the value indicated by the Serving-Grant value in the initial configuration information (there is a corresponding relation between the Serving-Grant value in the initial configuration information and the value indicated by the Serving-Grant value in the initial configuration information, as to the corresponding relation between the Serving-Grant value 0-37 and the value indicated by the Serving-Grant value 0-37, please refer to the 3GPP TS25.321 v6.7.0 Table 9.2.5.2.1.1, the value indicated by the value 38 is 0 grant), then proceeding to Step S12.

Step S12: It is determined whether the *primary* grant is selected in the primary/secondary grant selection. If selected, proceeding to Step S13. If no, Step S14 is performed.

Step S13: The variable Primary_Grant_Available is set to be *true*, which indicates that, in the HSUPA execution, the value of the variable Serving-Grant is to be set by the primary grant information in the absolute scheduling grant information of the E-AGCH. Step S16 is performed.

Step S14: The variable Primary_Grant_Available is set to be *false*, which indicates that, in the HSUPA execution, the value of the variable Serving-Grant is to be set by the secondary grant information in the absolute scheduling grant information of the E-AGCH. Step S16 is performed.

Step S15: The value of the variable Serving-Grant is set to be zero and the variable Primary_Grant_Available is set to be *true*. In the case that the value of the variable Serving-Grant is zero, the UE has no available HSUPA transmission resource. Step 16 is performed.

Step S16: The variable Stored-secondary-grant is configured to be zero.

According to the flow shown in Fig. 2, the value of the variable Stored-secondary-grant always remains zero irrespective of whether or not the Serving-Grant value is configured and what the primary/secondary grant selection is. That is, the variable Stored-secondary-grant of the UE cannot be configured in the process of being initialized by the SRNC, and the value of the variable Stored-secondary-grant remains zero in whatever cases. Furthermore, in the process of using the HSUPA resource after initialization of configuration, if the UE is switched by the Node B from the primary grant to the secondary grant, the value of the variable Stored-secondary-grant of the UE will be given to the variable Serving-Grant. When the value of the variable Stored-secondary-grant, which can only be zero when the initialization of configuration completes, is given to variable Serving-Grant, the value of the variable Serving-Grant is, as a result, zero. As described above, no HSUPA transmission resource is available to the UE in the case that the value of the variable Serving-Grant is zero. Therefore, this above case will finally result in that no HSUPA transmission resource is available to the UE and HSUPA data can not be transmitted outside, which apparently is not a desired result after the UE is controlled by the Node B to switch from the primary grant to the secondary grant.

Accordingly, at present, in order to avoid the above case, the Node B needs to transmit additional E-AGCH channel information to configure the value of the variable Stored-secondary-grant in the UE regardless of the type for initialization of configuration which the SRNC may perform to the UE. Such an operation, albeit avoiding the problem occurred after the primary/secondary switching that no HSUPA transmission resource is available to the UE, considerably consumes many of the limited radio resource.

### Summary of the Invention

The present invention is directed to providing a method and apparatus for processing the serving-grant initial configuration information, so that the Node B does not need to transmit additional E-AGCH channel information again in all cases to configure the variable Stored-secondary-grant in the UE after the UE performs the initializing configuration in accordance with the Serving-Grant initializing configuration information, transmitted by the SRNC.

An Embodiment of the present invention provides a method for processing Serving-Grant initial configuration information in a user equipment in a wireless communication system that supports High Speed Uplink Packet Access, HSUPA, comprising receiving a Serving-Grant initial configuration information before the user equipment begins to utilize the HSUPA resources, the Serving-Grant initial configuration information comprising information of a Serving-Grant value and a primary/secondary grant selector; setting a variable Stored-secondary-grant to be a value indicated by the Serving-Grant value in the Serving-Grant initial configuration information if the primary/secondary grant selector in the Serving-Grant initial configuration information indicates secondary.

An embodiment of the present invention further provides a user equipment for use in a wireless communication system that supports HSUPA, for processing the Serving-Grant initial configuration information, the user equipment comprising: a receiving unit adapted to receive a Serving-Grant initial configuration information before the user equipment begins to utilize the HSUPA resources, the Serving-Grant initial configuration information comprising information of a Serving-Grant value and a primary/secondary grant selector: a variable setting unit, adapted to set a variable Stored-secondary-grant to be a value indicated by the Serving-Grant value indicated in the Serving-Grant initial configuration information if the primary/secondary grant selector in the Serving-Grant initial configuration information indicates secondary.
An embodiment of the present invention further provides a method for processing Serving-Grant initial configuration information in a user equipment in a wireless communication system that supports High Speed Uplink Packet Access, HSUPA, comprising: receiving a Serving-Grant initial configuration information before the user equipment begins to utilize the HSUPA resources; the Serving-Grant initial configuration information comprising a secondary Serving-Grant value; and setting a variable Stored-secondary-grant to be a value indicated by the secondary Serving-Grant value in the Serving-Grant initial configuration information if the Serving-Grant initial configuration information contains the secondary Serving-Grant value.

According to the embodiments of the present invention, after the Serving-Grant initial configuration information is received, the variable Stored-secondary-grant is set to be the value indicated in the initial configuration information in the case that a preset condition is satisfied. Accordingly, the value in the variable Stored-secondary-grant after an initializing configuration is not always zero. Moreover, during the process of using HSUPA resource, the Node B does not need to transmit again additional E-AGCH channel information to configure the variable Stored-secondary-grant in the UE as long as the value in the variable Stored-secondary-grant is a non-zero grant. In other words, the Node B does not need to transmit additional E-AGCH channel information again in all cases to configure the variable Stored-secondary-grant in the UE, and therefore radio network resources are saved.

### Brief Description of the Drawings

Fig. 1 is the flow chart of data transmission of HSUPA;

Fig. 2 is the flow chart of processing the Serving-Grant initial configuration information at present;

Fig. 3 is the flow chart of processing the Serving-Grant initial configuration information in the Embodiment of the present invention;

Fig. 4 is the flow chart of processing the Serving-Grant initial configuration information in the Embodiment 2 of the present invention;

Fig. 5 is the flow chart of processing the Serving-Grant initial configuration information in the first example useful for understanding the invention;

Fig. 6 is the flow chart of processing the Serving-Grant initial configuration information in the second example useful for understanding the invention; and

Fig. 7 is the diagram of the configuration of a preferred embodiment of the UE of the present invention.

### Detailed Description of the Embodiments

Detailed description about specific embodiments of the present invention is given as follows by reference to the drawings.

### (Embodiment 1)

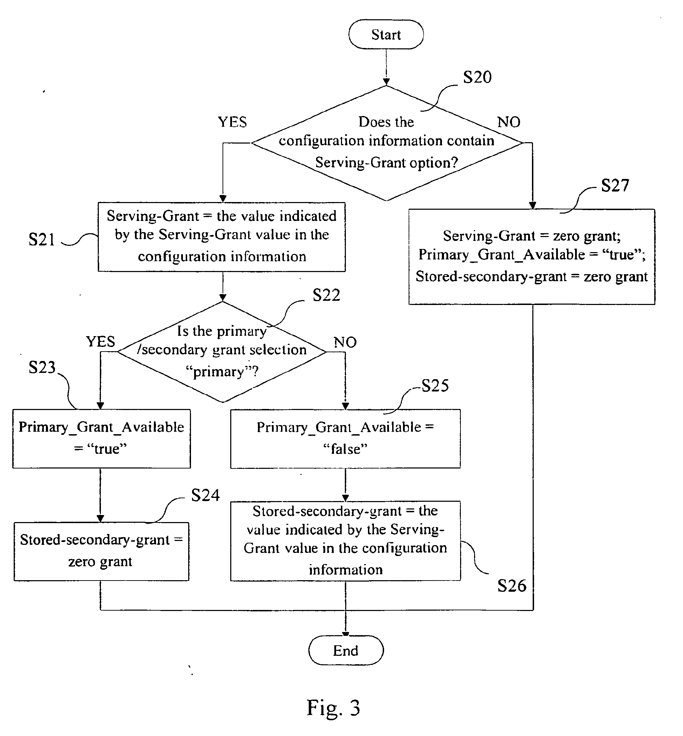

In the embodiments, , in the first place, the respective configuration of the variable Serving-Grant and variable Stored-secondary-grant in a UE may be implemented by changing the processing flow of the Serving-Grant initial configuration information in the UE, without changing the Serving-Grant initial configuration information at present. Therefore, the purpose of configuring the Stored-Secondary-grant during the initialization process is achieved. Fig. 3 is the flow chart of processing the Serving-Grant initial configuration information in the embodiment 1 of this present invention. In this embodiment, the current Serving-Grant initial configuration information in the RRC message shown in Table 1 is employed. As illustrated by Fig. 3, after the UE receives the Serving-Grant initial configuration information in the RRC message, the following processing flow is performed :

First of all, in accordance with the initial configuration information in the RRC message, it is determined whether the configuration information contains Serving-Grant option (Step S20). Step S21 is performed if the determination result is that the initial configuration information contains Serving-Grant option and Step S27 is performed otherwise.

Step S21: The variable Serving-Grant is set to be the value as indicated by the Serving-Grant value in the initial configuration information, and Step S22 is performed.

Step S22: It is determined whether the primary/secondary grant selection in the initial configuration information is *primary*, i.e., whether the initial configuration information contains the primary grant selection. Step S23 is performed if the initial configuration information contains the primary grant selection and Step S25 is performed otherwise.

Step S23: The variable Primary_Grant_Available is set to be *true*, i.e., during the channel execution, the value of the variable Serving-Grant is set by the primary grant in the E-AGCH. Step S24 is performed.

Step S24: The variable Stored-secondary-grant is set to be zero grant.

When the primary/secondary grant selection in the initial configuration information is *secondary*, i.e., the initial configuration information contains the secondary grant selection, the Stored-secondary-grant needs to be configured, in Step S25, the variable Primary_Grant_Available is set to be *false*, i.e., during the channel execution, the Serving-Grant is set by the secondary grant in the E-AGCH. Step S26 is performed.

Step S26: The variable Stored-secondary-grant is set to be the value indicated by the serving-grant value contained in the initial configuration information.

Step S27: The variable Serving-Grant is set to be zero grant, and the variable Stored-secondary-grant is set to be zero grant, and the variable Primary_Grant_Available is set to be *true*. This result indicates that SRNC has not configured the Serving-Grant and the Stored-secondary-grant, and during the channel execution, the Serving-Grant is to be set by the primary grant in the E-AGCH.

In the current method for processing the initial configuration information, the variable Stored-secondary-grant always remains zero regardless of whether or not the Serving-Grant value is configured and which one the primary/secondary grant is selected. That is, the variable stored-secondary-grant of the UE cannot be configured when configuring or reconfiguring the radio channel. In contrast, as can be seen from the processing flow in the above embodiment 1 of the present invention, as to the variable Stored-secondary-grant, as long as the initial configuration information contains the Serving-Grant value and the secondary grant selection (corresponding to one preset condition set by the UE), the variable Stored-secondary-grant is set to be the value indicated by the Serving-Grant value in the initial configuration information, moreover, if the value indicated by the Serving-Grant value is non-zero grant, in the subsequent process of using HSUPA resource, the Node B does not need to configure the value of the variable Stored-secondary-grant by additional E-AGCH channel information again, and the problem that no HSUPA transmission resource is available to the UE when switching from the primary grant to the secondary grant will not take place. Specifically, no matter the Primary_Grant_Available is set to be *true* or *false* during the initial configuration process, as long as the value in the variable Stored-secondary-grant is non-zero grant, even in the subsequent process of using the HSUPA resource, when the Node B switches the UE from the primary grant to secondary grant, the value of the variable Stored-secondary-grant, since being non-zero grant in the initialization process, will not make the variable Serving-Grant be zero grant when given to the variable Serving-Grant. Therefore the UE is not deprived of available HSUPA transmission resource.

In other words, the UE, based on this received initial configuration information in the RRC message comprising the Serving-Grant value and the primary/secondary grant selection, appropriately configures each of its internal variable: i.e. the variable Serving-Grant, the variable Stored-Secondary-Grant, as well as the variable Primary_Grant_Available, thereby the problem that the variable Stored-secondary-grant of the UE can not be configured when configuring or reconfiguring the radio channel is solved. By means of such a method for processing the initial configuration information, the Node B, instead of having to configure the variable Stored-Secondary-Grant in all cases by the additional E-AGCH channel information, no longer need to configure the variable Stored-Secondary-Grant as long as it is set to be non-zero grant during the initialization process, which thus, as can be seen, saves the channel bandwidth, i.e., saves the limited radio resource. Meanwhile, it is also possible to reduce the processing complexity of the Node B and enhance the ability of the network for controlling a UE, thereby improving the system performance.

### (Embodiment 2)

The present invention may also modify the initial configuration information in the existing standard TS25.331 v6.8.0 (shown in Table 1), so that the SRNC may simultaneously configure the variable Serving-Grant, the variable Primary_Grant_Available, and the variable Stored-Secondary-Grant. The configuration information of Serving-Grant in this embodiment is shown in Table 2:

**Table 2**

| | | | | | |
|---|---|---|---|---|---|
| > Serving-Grant | optional | | | | REL-6 |
| >>primary Serving-Grant value | optional | | integer(0..37,38) | 0∼37 corresponding to the values in the Table 9.2.5.2.1.1 in the TS25.321, 38 indicates the value of zero grant. | REL-6 |
| >>secondary Serving-Grant value | optional | | integer(0..37,38) | 0∼37 corresponding to the values in the Table 9.2.5.2.1.1 in the TS25.321, 38 indicates the value of zero grant. | REL-6 |

The configuration information may take more than one form, as long as the setting of the variable Serving-Grant in the UE in accordance with the configuration information can be performed, e.g. the configuration information may include only the primary Serving-Grant value and/or the secondary Serving-Grant value, as shown in Table 3. In Table 2 and Table 3, the primary Serving-Grant value and secondary Serving-Grant value are optional items; both or either one of them may be contained in the configuration information.

**Table 3**

| | | | | | |
|---|---|---|---|---|---|
| >primary Serving-Grant value | optional | | integer(0..37,38) | 0-37 correspond to the values in the Table 9.2.5.2.1.1 in the TS25.321, 38 indicates the value of zero grant. | REL-6 |
| >secondary Serving-Grant value | optional | | integer(0..37,38) | 0-37 correspond to the values in the Table 9.2.5.2.1.1 in the TS25.321, 38 indicates the value of zero grant. | REL-6 |

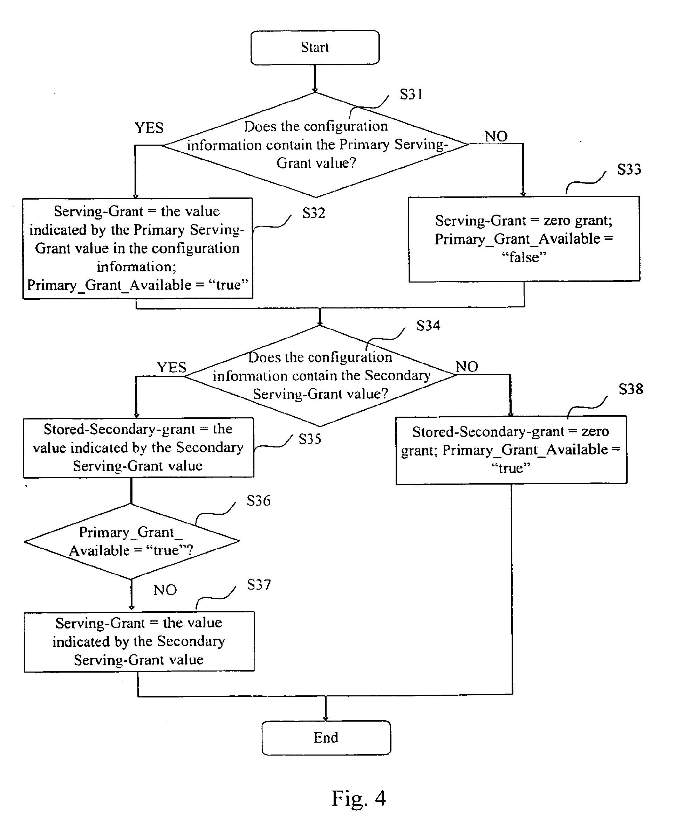

Taking the content shown in Table 2 and Table 3 as an initial configuration information, the processing flow of the UE is illustrated in Fig. 4:

It is determined, first of all, whether the initial configuration information contains the Primary Serving-Grant value (Step S31).

If the Primary Serving-Grant value is contained, Step S32 is performed to set the variable Primary_Grant_Available to be *true*, and to set the variable Serving-Grant to be the value as indicated by the Primary Serving-Grant value in the initial configuration information.

If the Primary Serving-Grant value is not contained, Step S33 is performed to set the variable Serving-Grant to be zero grant, and to set the variable Primary_Grant_Available to be f*alse*.

The variable Stored-secondary-grant is set according to whether or not the initial configuration information contains the Secondary Serving-Grant value.

In Step S34, whether or not the initial configuration information contains the Secondary Serving-Grant value is determined. If the Secondary Serving-Grant value is not contained, the variable Stored-Secondary-Grant is directly set to be zero grant and the variable Primary_Grant_Available is set to be *true* (Step S38). If it is determined that the initial configuration information contains the Secondary Serving-Grant value, i.e. it is determined that the variable Stored-secondary-grant needs to be configured, and Step S35 is performed:

Step S35: The variable Stored-secondary-grant is set to be the value as indicated by the Secondary Serving-Grant value in the initial configuration information.

Step S36: It is determined whether or not the Primary_Grant_Available is *true* and no operation will be performed if the Primary_Grant_Available is *true*, and Step S37 is performed otherwise.

Step S37: The Serving-Grant is set to be the value as indicated by the Secondary Serving-Grant value of the initial configuration information if the variable Primary_Grant_Available is *false*.

According to the processing flow in the Embodiment 2, as long as the initial configuration information contains the secondary Serving-Grant value (corresponding to one preset condition set by the UE), the variable Stored secondary-grant is set to be the value indicated by the secondary Serving-Grant value in the initial configuration information. If the value indicated by the Serving-Grant value is non-zero grant, during the subsequent HSUPA process, the Node B does not need to configure the value of the variable Stored-secondary-grant by additional E-AGCH Channel information again, and the problem that no HSUPA transmission resource is available to the UE after switching from the primary grant to the secondary grant will not happen, and therefore the limited radio resource are saved.

Furthermore, if the initial configuration information contains the secondary Serving-Grant value only and does not contain the primary Serving-Grant value, the variable Serving-Grant is set to be the value indicated by the secondary Serving-Grant value in the initial configuration information; if the initial configuration information contains both the secondary Serving-Grant value and the primary Serving-Grant value, the variable Serving-Grant is set to be the value indicated by the primary Serving-Grant value in the initial configuration information.

Accordingly, in the embodiment 2 of the present invention, the variable Serving-Grant, the variable Stored-secondary-grant, the variable Primary_Grant_Available may be simultaneously configured and it is ensured that these configurations does not conflict with each other, by means of the method that separately configures the primary/secondary Serving-Grant. Accordingly, a flexible configuration is realized,

### First example useful for understanding the invention

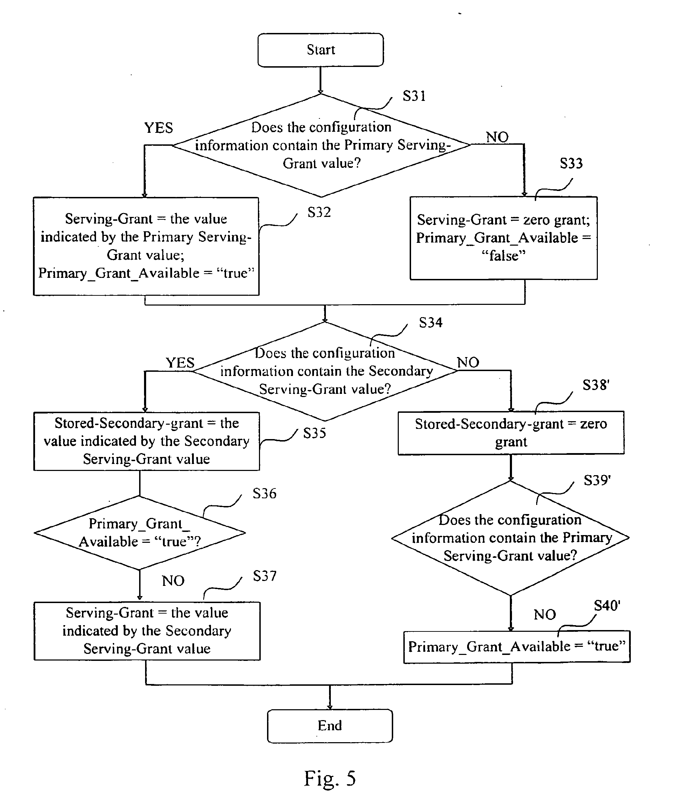

Alternatively, by utilizing the configuration information of the present invention (Table 2 or Table 3), the UE may employ the processing flow illustrated in Fig. 5, which differs from the processing flow illustrated in Fig. 4 merely in that: in Step S34, when it is determined that the initial configuration information does not contain the Secondary Serving-Grant, the Stored-Secondary-Grant is set to be zero grant (Step S38'), and whether or not the initial configuration information contains the Primary Serving-Grant value is determined (Step S39'), and if the Primary Serving-Grant value is not contained, the Primary_Grant_Available is set to be *true* (Step S40'). This result indicates that SRNC does not configure the Serving-Grant or the Stored-Secondary-Grant, and during the channel execution, the Serving-Grant is to be set by the primary grant. This example may also achieve the effect of the Embodiment 2 of the present invention.

### Second example useful for undrstanding the invention

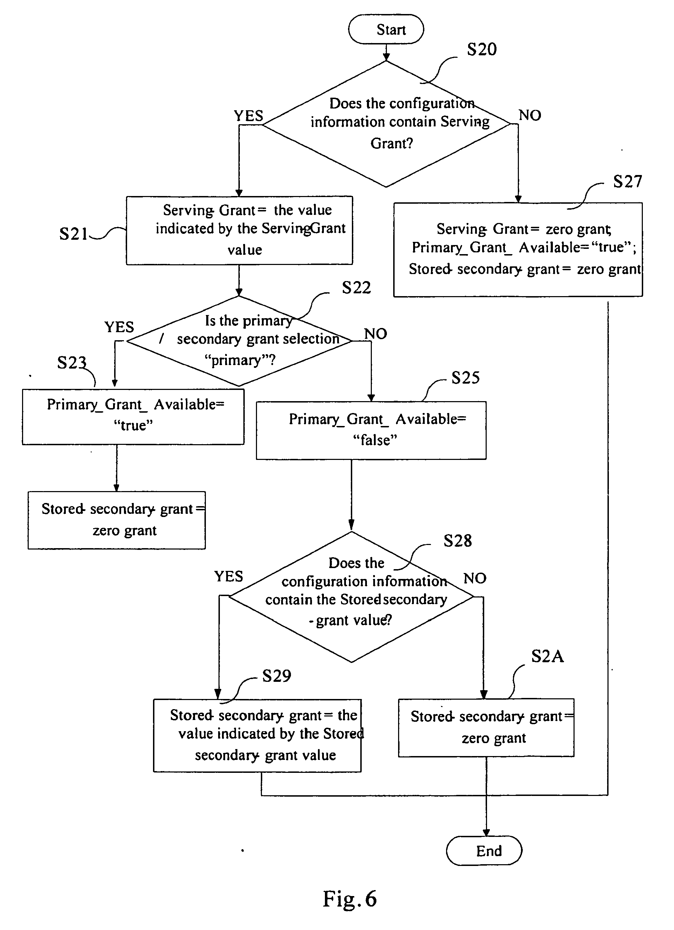

The configuration of the initial grant may also be performed by the initial configuration information in Table 4 as defined by the present invention, with the specific configuration flow shown in Fig. 6.

**Table 4**

| | | | | | |
|---|---|---|---|---|---|
| > Serving-Grant | optional | | | | REL-6 |
| >>Serving-Grant value | Mandatory present | | integer(0..37,38) | 0∼37 correspond to the values in the Table 9.2.5.2.1.1 in the TS2S.321, 38 indicates the value of zero grant. | REL-6 |
| >>primary/ secondary grant selector | Mandatory present | | enumerate: {"primary", "secondary"} | indicating whether the Serving-Grant is received via the primary E-RNTI or via the secondary E-RNTI. | REL-6 |
| >>Stored- Secondary-Grant value | optional | | integer(0..37,38) | 0∼37 correspond to the values in the Table 9.2.5.2.1.1 in the TS25.321,38 indicates the value of zero grant. | REL-6 |

In this example, the processing of the primary Serving-Grant value and primary/secondary grant selection is substantially the same as that in the Embodiment 1 of the present invention except that, when the primary/secondary grant selection is secondary (i.e. the initial configuration information contains the secondary grant selection), instead of setting the value of the variable Stored-secondary-grant as the value indicated by the Serving-Grant value, it is determined that whether or not this initial configuration information contains the Stored-Secondary-Grant value, and set the value of the variable Stored-Secondary-Grant to be equal to the value indicated by the Stored-Secondary-Grant value if Stored-Secondary-Grant value is contained. The specific implementing steps are described as follows:

Steps S20, S21, S22, S23, S25, S27 are substantially similar to those in the Embodiment 1, of the present invention, and therefore are not described. The difference lies in that in the second example Steps S24, S26 are omitted, but Steps S28, S29 and S2A are added. The details of which are as follows.

After Steps S23 and S25, Step S28 is performed to determine whether or not the initial configuration information contains the Stored-secondary-grant value, and the variable Stored-secondary-grant is set to be the value indicated by the Stored-secondary-grant value in the initial configuration information if the Stored-secondary-grant value is contained (Steps S29); otherwise the Stored-Secondary-grant is set to be zero grant (Steps S2A).

According to the processing flow in the above second example as long as the initial configuration information contains the Stored-secondary-grant value (corresponding to a preset condition set by the UE), the variable Stored-secondary-grant is set to be the value indicated by the Stored-Secondary-grant value. If the value indicated by the Stored-Secondary-grant value is non-zero grant, during the subsequent process of using HSUPA resource, the Node B does not need to configure the value of the variable Stored-secondary-grant by additional E-AGCH channel information again, and the problem that no HSUPA transmission resource is available to the UE after switching from the primary grant to the secondary grant will not happen.

Accordingly, in this second example not only the beneficial effect of saving radio network resource may be achieved as that achieved in Embodiment 1, but also the variable Stored-Secondary-Grant and the variable Serving-Grant are separately configured to make both the variables independent of each other, and therefore this second example has more flexibility.

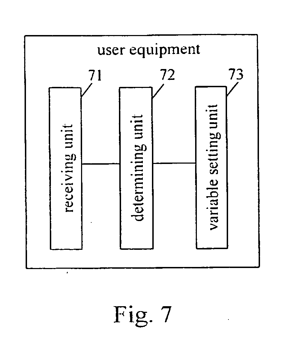

The present invention also provides a UE for processing the Serving-Grant initial configuration information with reference made to Fig. 7, which is the diagram of the configuration of a preferred embodiment of the UE of the present invention. In one aspect, the UE shown in this embodiment for processing the Serving-Grant initial configuration information is a further improvement of the existing UE, thus only the logic units related to the improved portion is illustrated in the configuration diagram of this embodiment without elaborating the logic units of the present invention which are the same as those in the existing UE. In another aspect, the UE in the embodiment and the aforementioned respective embodiments and examples of the methods for processing the Serving-Grant initial configuration information bear the same inventive idea, and therefore the same or corresponding technical features of them are given a brief description. By referring to the above described explanations, those skilled in the art will find it easy to implement the UE of this embodiment. A specific introduction is made as follows to the internal logic units related to the spirit of the present invention in conjunction with the operating principle of the UE of the exemplary embodiment when the initial configuration information is processed.

Firstly, the UE receives, via the receiving unit 71, the Serving-Grant initial configuration information from the SRNC. The Serving-Grant initial configuration information may be contained in the RRC message configured or re-configured via the radio channel and the Serving-Grant initial configuration information includes, but not limited to, one of the above described Table 1 through Table 4.

The receiving unit 71 notifies the determining unit 72 of the Serving-Grant initial configuration information received by the receiving unit 71. The determining unit 72 performs determination on the initial configuration information, the determination content comprising at least whether the initial configuration information satisfies the preset condition. The variable setting unit 73 sets, in accordance with the determination result of the determining unit 72, the value of internal variable, with the internal variable comprising: the variable Serving-Grant, the variable Primary_Grant_Available and the variable Stored-secondary-grant. The variable setting unit 73 sets the value of the variable Stored-secondary-grant to be the value as indicated in the initial configuration information as long as the determination result of the determining unit 72 shows that the initial configuration information satisfies the preset condition. The illustrated value indicated in the initial configuration information varying according to different preset conditions.

The initial configuration information may have various cases, e.g., any one of Table 1 through Table 4 or another form, and therefore, the preset condition within the UE may also have different embodiments. The content that needs to be determined by the determining unit 72 and the case of variable setting performed by the variable setting unit 73 also vary slightly. Exemplary embodiments are given below:

Embodiment 1: When the initial configuration information is the content shown in Table 1, the preset condition is that the initial configuration information contains the Serving-Grant value and the secondary grant selection. Specifically, the determining unit 72 should, at least, check whether or not the initial configuration information contains the Serving-Grant value and the secondary grant selection. If the Serving-Grant value and the secondary grant selection are contained, the variable setting unit 73 sets the variable Stored-secondary-grant to be the value as indicated by the Serving-Grant value in the initial configuration information, i.e., the value of the variable Stored-secondary-grant equals the value indicated by the Serving-Grant value in the initial configuration information. The value of the variable Stored-secondary-grant is set to be zero if the determination result of the determining unit 72 shows that the preset condition is not satisfied.

If the determination result of the determining unit 72 shows that the initial configuration information contains the secondary grant selection, then the variable setting unit 73 also sets the value of the variable Primary_Grant_Available to be *false*; if the determination result of the determining unit 72 shows that the initial configuration information contains the Serving-Grant value and the primary grant selection, the variable setting unit 73 also sets the value of the variable Primary_Grant_Available to be true, and sets the value of the variable Stored-Secondary-grant to be zero. For other specific determination content and setting content, please refer to the corresponding technical feature shown in the afore-mentioned Embodiment 1.

Embodiment 2: When the initial configuration information is the content shown in Table 2 or the Table 3, the preset condition is that the initial configuration information contains the Secondary Serving-Grant value. Specifically, the determining unit 72 should at least check whether the initial configuration information contains the Secondary Serving-Grant value. If the Secondary Serving-Grant value is contained, the variable setting unit 73 sets the variable Stored-secondary-grant to be the value as indicated by the Secondary Serving-Grant value in the initial configuration information. The value of the variable Stored-secondary-grant is set to be zero if the Secondary Serving-Grant value is not contained (i.e., the preset condition is not satisfied).

In addition, the determination content of the determining unit 72 also contains: determining whether or not the initial configuration information contains the Primary Serving-Grant value. If this determination result shows that the initial configuration information contains only the Secondary Serving-Grant value but not the Primary Serving-Grant value, the variable setting unit 73 sets the variable Serving-Grant to be the value indicated by the Secondary Serving-Grant value in the initial configuration information. If this determination result shows that the Primary Serving-Grant value is contained, the value of the variable Serving-Grant equals the value as indicated by the Primary Serving-Grant value in the initial configuration information. For other specific determination content and setting content, please refer to the corresponding technical feature shown in the aforementioned Embodiment 2 or first example.

First example: When the initial configuration information is the content shown in Table 4, the preset condition is that the initial configuration information contains Stored-Secondary-Grant value. Specifically, the determining unit 72 should, at least, check whether the initial configuration information contains Stored-Secondary-Grant value. If Stored-Secondary-Grant value is contained, the variable setting unit 73 sets the variable Stored-Secondary-Grant to be the value indicated by the Stored-Secondary-grant value in the initial configuration information. The value of the variable Stored-secondary-grant is set to be zero if Stored-Secondary-Grant value is not contained (i.e., the preset condition is not satisfied).

In addition, the determination content of the determining unit 72 also contains: determining whether the initial configuration information contains the Primary grant selection or the Secondary grant selection; if the determination result of this determining unit 72 shows that the initial configuration information contains the Secondary grant selection, then the variable setting unit 73 further sets the value of the variable Primary_Grant_Available to be valve, while setting the value of the variable Primary_Grant_Available to be *true* if the Primary grant selection is contained. For other specific determination content and setting content, please refer to the corresponding technical feature shown in the aforementioned second example.

As can be seen from the above various embodiments, the UE shown by the embodiments of the present invention for processing the initial configuration information may, based on the received initial configuration information, appropriately configure each of its internal variable: the variable Serving-Grant and the variable Stored-secondary-grant , as well as the variable Primary_Grant_Available, thereby solving the problem that the variable Stored-Secondary-Grant of the UE cannot be configured when configuring or reconfiguring via the radio channel. Therefore, the variable Stored-secondary-grant no longer needs configuring as long as it is set to be non-zero grant in the initialization process. In other words, the Node B does not have to configure the variable Stored-Secondary-Grant in all cases by the additional E-AGCH channel information. Therefore channel bandwidth is saved, i.e., the limited radio resources are saved. Meanwhile the processing complexity of the Node B is reduced, and the ability of the network for controlling the UE is enhanced. Accordingly, the system performance is improved.

The purpose of the above respective embodiments is to describe and interpret the principle of the present invention. It should be understood, however, that the specific embodiments of the present invention are not limited thereto.

## Claims

1. A method for processing Serving-Grant initial configuration information in a user equipment in a wireless communication system that supports High Speed Uplink Packet Access, HSUPA, comprising:
receiving a Serving-Grant initial configuration information before the user equipment begins to utilize the HSUPA resources, the Serving-Grant initial configuration information comprising information of a Serving-Grant value and a primary/secondary grant selector;
**characterized by**
setting a variable Stored-secondary-grant to be a value indicated by the Serving-Grant value in the Serving-Grant initial configuration information if the primary/secondary grant selector in the Serving-Grant initial configuration information indicates secondary.

2. The method according to claim 1, **characterized by** further comprising:
setting a variable Primary_Grant_Available to be *false* if the primary/secondary grant selector in the Serving-Grant initial configuration information indicates secondary.

3. The method according to claim 1, **characterized by** comprising:
setting a variable Primary_Grant_Available to be *true* if the primary/secondary grant selector in the Serving-Grant initial configuration information indicates primary.

4. The method according to any one of the claims 1 to 3, **characterized by** setting the variable Stored- secondary-grant to be zero grant if the primary/secondary grant selector in the Serving-Grant initial configuration information indicates primary.

5. A user equipment for use in a wireless communication system that supports High Speed Uplink Packet Access, HSUPA, comprising:
a receiving unit (71) adapted to receive a Serving-Grant initial configuration information before the user equipment begins to utilize the HSUPA resources, the Serving-Grant initial configuration information comprising information of a Serving-Grant value and a primary/secondary grant selector;
**characterized by**
further comprising a variable setting unit (73), adapted to set a variable Stored-secondary-grant to be a value indicated by the Serving-Grant value indicated in the Serving-Grant initial configuration information if the primary/secondary grant selector in the Serving-Grant initial configuration information indicates secondary.

6. The user equipment according to claim 5, **characterized by** the variable setting unit (73) further adapted to set a variable Primary_Grant_Available to be *false* if the primary/secondary grant selector in the Serving-Grant initial configuration information indicates secondary.

7. The user equipment according to claim 5, **characterized by** the variable setting unit (73) further adapted to set a variable Primary_Grant_Available to be *true* if the primary/secondary grant selector in the Serving-Grant initial configuration information indicates primary.

8. The user equipment according to any one of the claims 5 to 7, **characterized by** the variable setting unit (73) further adapted to set the variable Stored-secondary-grant to be zero grant if the primary/secondary grant selector in the Serving-Grant initial configuration information indicates primary.

9. The user equipment according to any one of the claims 5 to 8, **characterized by** the user equipment further comprising a determining unit (72) adapted to check whether the Serving-Grant initial configuration information contains the primary/secondary Serving-Grant selector.

10. A method for processing Serving-Grant initial configuration information in a user equipment in a wireless communication system that supports High Speed Uplink Packet Access, HSUPA, comprising:
receiving a Serving-Grant initial configuration information, before the user equipment begins to utilize the HSUPA resources;
**characterized by**
the Serving-Grant initial configuration information comprising a secondary Serving-Grant value; and
by setting a variable Stored-secondary-grant to be a value indicated by the secondary Serving-Grant value in the Serving-Grant initial configuration information.

11. The method according to claim 10, wherein the Serving-Grant initial configuration information further comprises a primary Serving-Grant value, the method further comprising:
setting a variable Serving-Grant value to be the value as the primary Serving-Grant value in the Serving-Grant initial configuration information.

12. The method according to claim 10, further comprising:
setting a variable Serving-Grant value to be the value indicated by the secondary Serving-Grant value in the initial configuration information if the Serving-Grant initial configuration information does not contain a primary Serving-Grant value.

## Patentansprüche

1. Verfahren zum Verarbeiten von Serving-Grant-Anfangskonfigurationsinformationen in einem Benutzergerät in einem drahtlosen Kommunikationssystem, das High Speed Uplink Packet Access HSUPA unterstützt, mit den folgenden Schritten:
Empfangen einer Serving-Grant-Anfangskonfigurationsinformation, bevor das Benutzergerät beginnt, die HSUPA-Betriebsmittel zu benutzen, wobei die Serving-Grant-Anfangskonfigurationsinformation Informationen eines Serving-Grant-Werts und eines Primär/Sekundär-Grant-Selektors umfasst;
**gekennzeichnet durch**
Setzen einer Variablen Stored-secondary-grant auf einen Wert, der **durch** den Serving-Grant-Wert in der Serving-Grant-Anfangskonfigurationsinformation angegeben wird, wenn der Primär/Sekundär-Grant-Selektor in der Serving-Grant-Anfangskonfigurationsinformation sekundär angibt.

2. Verfahren nach Anspruch 1, **dadurch gekennzeichnet, dass** es ferner Folgendes umfasst:
Setzen einer Variablen Primary_Grant_Available auf *false*, wenn der Primär/- Sekundär-Grant-Selektor in der Serving-Grant-Anfangskonfigurationsinformation sekundär angibt.

3. Verfahren nach Anspruch 1, **dadurch gekennzeichnet, dass** es Folgendes umfasst:
Setzen einer Variablen Primary_Grant_Available auf *true,* wenn der Primär/Sekundär-Grant-Selektor in der Serving-Grant-Anfangskonfigurationsinformation primär angibt.

4. Verfahren nach einem der Ansprüche 1 bis 3, **gekennzeichnet durch** Setzen der Variablen Stored-secondary-grant auf Null-Grant, wenn der Primär/Sekundär-Grant-Selektor in der Serving-Grant-Anfangskonfigurationsinformation primär angibt.

5. Benutzergerät zur Verwendung in einem drahtlosen Kommunikationssystem, das High Speed Uplink Packet Access HSUPA unterstützt, umfassend:
eine Empfangseinheit (71), die dafür ausgelegt ist, eine Serving-Grant-Anfangskonfigurationsinformation zu empfangen, bevor das Benutzergerät beginnt, die HSUPA-Betriebsmittel zu benutzen, wobei die Serving-Grant-Anfangskonfigurationsinformation Informationen eines Serving-Grant-Werts und eines Primär/Sekundär-Grant-Selektors umfasst;
ferner **gekennzeichnet durch**
Umfassen einer Variablensetzeinheit (73), die dafür ausgelegt ist, eine Variable Stored-secondary-grant auf einen Wert zu setzen, der **durch** den Serving-Grant-Wert angegeben wird, der in der Serving-Grant-Anfangskonfigurationsinformation angegeben wird, wenn der Primär/Sekundär-Grant-Selektor in der Serving-Grant-Anfangskonfigurationsinformation sekundär angibt.

6. Benutzergerät nach Anspruch 5, **dadurch gekennzeichnet, dass** die Variablensetzeinheit (73) ferner dafür ausgelegt ist, eine Variable Primary_Grant_Available auf *false* zu setzen, wenn der Primär/Sekundär-Grant-Selektor in der Serving-Grant-Anfangskonfigurationsinformation sekundär angibt.

7. Benutzergerät nach Anspruch 5, **dadurch gekennzeichnet, dass** die Variablensetzeinheit (73) ferner dafür ausgelegt ist, eine Variable Primary_Grant_Available auf *true* zu setzen, wenn der Primär/Sekundär-Grant-Selektor in der Serving-Grant-Anfangskonfigurationsinformation primär angibt.

8. Benutzergerät nach einem der Ansprüche 5 bis 7, **dadurch gekennzeichnet, dass** die Variablensetzeinheit (73) ferner dafür ausgelegt ist, die Variable Stored-secondary-grant auf Null-Grant zu setzen, wenn der Primär/Sekundär-Grant-Selektor in der Serving-Grant-Anfangskonfigurationsinformation primär angibt.

9. Benutzergerät nach einem der Ansprüche 5 bis 8, **dadurch gekennzeichnet, dass** das Benutzergerät ferner eine Bestimmungseinheit (72) umfasst, die dafür ausgelegt ist, zu prüfen, ob die Serving-Grant-Anfangskonfigurationsinformation den Primär/Sekundär-Serving-Grant-Selektor enthält.

10. Verfahren zum Verarbeiten von Serving-Grant-Anfangskonfigurationsinformationen in einem Benutzergerät in einem drahtlosen Kommunikationssystem, das High Speed Uplink Packet Access HSUPA unterstützt, mit den folgenden Schritten:
Empfangen einer Serving-Grant-Anfangskonfigurationsinformation, bevor das Benutzergerät beginnt, die HSUPA-Betriebsmittel zu benutzen;
**dadurch gekennzeichnet, dass**
die Serving-Grant-Anfangskonfigurationsinformation einen Sekundär-Serving-Grant-Wert umfasst; und
durch Setzen einer Variablen Stored-secondary-grant auf einen Wert, der durch den Sekundär-Serving-Grant-Wert in der Serving-Grant-Anfangskonfigurationsinformation angegeben wird.

11. Verfahren nach Anspruch 10, wobei die Serving-Grant-Anfangskonfigurationsinformation ferner einen Primär-Serving-Grant-Wert umfasst, wobei das Verfahren ferner Folgendes umfasst:
Setzen eines variablen Werts Serving-Grant auf den Wert als den Primär-Serving-Grant-Wert in der Serving-Grant-Anfangskonfigurationsinformation.

12. Verfahren nach Anspruch 10, ferner mit dem folgenden Schritt:
Setzen eines variablen Werts Serving-Grant auf den Wert, der durch den Sekundär-Serving-Grant-Wert in der Anfangskonfigurationsinformation angegeben wird, wenn die Serving-Grant-Anfangskonfigurationsinformation keinen Primär-Serving-Grant-Wert enthält.

## Revendications

1. Procédé de traitement d'informations de configuration initiale de Serving-Grant (allocation de ressources) dans un équipement utilisateur dans un système de communication sans fil qui supporte le HSUPA (High Speed Uplink Packet Access ou Accès à haut débit en Mode Paquets sur liaison montante), comprenant :
la réception d'informations de configuration initiale de Serving-Grant avant que l'équipement utilisateur commence à utiliser les ressources HSUPA, les informations de configuration initiale de Serving-Grant comprenant des informations d'une valeur de Serving-Grant et d'un sélecteur d'octroi primaire/secondaire ;
**caractérisé par** :
l'établissement d'un Octroi secondaire mémorisé variable comme valeur indiquée par la valeur de Serving-Grant dans les informations de configuration initiale de Serving-Grant si le sélecteur d'octroi primaire/secondaire dans les informations de configuration initiale de Serving-Grant indique un octroi secondaire.

2. Procédé selon la revendication 1, **caractérisé en ce qu'**il comprend en outre :
l'établissement d'un Octroi Primaire Disponible variable comme étant *faux* si le sélecteur d'octroi primaire/secondaire dans les informations de configuration initiale de Serving-Grant indique un octroi secondaire.

3. Procédé selon la revendication 1, **caractérisé en ce qu'**il comprend :
l'établissement d'un Octroi Primaire Disponible variable comme étant *vrai* si le sélecteur d'octroi primaire/secondaire dans les informations de configuration initiale de Serving-Grant indique un octroi primaire.

4. Procédé selon l'une quelconque des revendications 1 à 3, **caractérisé par** l'établissement de l'Octroi secondaire mémorisé variable comme étant un octroi nul si le sélecteur d'octroi primaire/secondaire dans les informations de configuration initiale de Serving-Grant indique un octroi primaire.

5. Equipement utilisateur destiné à être utilisé dans un système de communication sans fil qui supporte le HSUPA (High Speed Uplink Packet Access ou Accès à haut débit en Mode Paquets sur liaison montante), comprenant :
une unité de réception (71) adaptée pour recevoir des informations de configuration initiale de Serving-Grant avant que l'équipement utilisateur commence à utiliser les ressources HSUPA, les informations de configuration initiale de Serving-Grant comprenant des informations d'une valeur de Serving-Grant et d'un sélecteur d'octroi primaire/secondaire ;
**caractérisé**
**en ce qu'**il comprend en outre une unité d'établissement variable (73), adaptée pour établir un Octroi secondaire mémorisé variable comme valeur indiquée par la valeur de Serving-Grant indiquée dans les informations de configuration initiale de Serving-Grant si le sélecteur d'octroi primaire/secondaire dans les informations de configuration initiale de Serving-Grant indique un octroi secondaire.

6. Equipement utilisateur selon la revendication 5, **caractérisé en ce que** l'unité d'établissement variable (73) est adaptée en outre pour établir un Octroi Primaire Disponible variable comme étant *faux* si le sélecteur d'octroi primaire/secondaire dans les informations de configuration initiale de Serving-Grant indique un octroi secondaire.

7. Equipement utilisateur selon la revendication 5, **caractérisé en ce que** l'unité d'établissement variable (73) est adaptée en outre pour établir un Octroi Primaire Disponible variable comme étant *vrai* si le sélecteur d'octroi primaire/secondaire dans les informations de configuration initiale de Serving-Grant indique un octroi primaire.

8. Equipement utilisateur selon l'une quelconque des revendications 5 à 7, **caractérisé en ce que** l'unité d'établissement variable (73) est adaptée en outre pour établir l'Octroi secondaire mémorisé variable comme étant un octroi nul si le sélecteur d'octroi primaire/secondaire dans les informations de configuration initiale de Serving-Grant indique un octroi primaire.

9. Equipement utilisateur selon l'une quelconque des revendications 5 à 8, **caractérisé en ce qu'**il comprend en outre une unité de détermination (72) adaptée pour vérifier si les informations de configuration initiale de Serving-Grant contiennent ou non le sélecteur primaire/secondaire de Serving-Grant.

10. Procédé de traitement d'informations de configuration initiale de Serving-Grant dans un équipement utilisateur dans un système de communication sans fil qui supporte le HSUPA (High Speed Uplink Packet Access ou Accès à haut débit en Mode Paquets sur liaison montante), comprenant :
la réception d'informations de configuration initiale de Serving-Grant avant que l'équipement utilisateur commence à utiliser les ressources HSUPA,
**caractérisé**
**en ce que** les informations de configuration initiale de Serving-Grant comprennent une valeur de Serving-Grant secondaire ; et
par l'établissement d'un Octroi secondaire mémorisé variable comme étant une valeur indiquée par la valeur de Serving-Grant secondaire dans les informations de configuration initiale de Serving-Grant.

11. Procédé selon la revendication 10, dans lequel les informations de configuration initiale de Serving-Grant comprennent en outre une valeur de Serving-Grant primaire, le procédé comprenant en outre :
l'établissement d'une valeur de Serving-Grant variable comme la valeur de Serving-Grant primaire dans les informations de configuration initiale de Serving-Grant.

12. Procédé selon la revendication 10, comprenant en outre :
l'établissement d'une valeur de Serving-Grant variable comme la valeur indiquée par la valeur de Serving-Grant secondaire dans les informations de configuration initiale si les informations de configuration initiale de Serving-Grant ne contiennent pas de valeur de Serving-Grant primaire.
